# EUROPEAN PATENT APPLICATION

(11) **EP 4 306 735 A2**
(43) Date of publication of application: **17.01.2024**
(21) Application number: 23212865.2
(22) Date of filing: 13.02.2019
(51) Int. Cl.: E04B 1/94

(54) **FLAME RETARDANT METAL-RESIN COMPOSITE MATERIAL**

(30) Priority: 14.02.2018 JP 2018024257; 25.09.2018 JP 2018178911
(62) Divisional of application: 19754544.5
(71) Applicant: Mitsubishi Chemical Infratec Co., Ltd., Tokyo 103-0021 (JP)
(72) Inventor: MURAKI, Kazuhiro, Tokyo (JP); YANAI, Eiji, Tokyo (JP)
(74) Representative: Ter Meer Steinmeister & Partner

(57) **Abstract**

A flame-retardant metal-resin composite material in which metal layers are respectively stacked on both surfaces of a core material layer containing a resin, wherein: the core material layer contains a metal hydroxide and a resin, the core material layer has a combustion calorific value of 2.0 MJ/kg or less, and the metal-resin composite material has a surface material peel strength of 2.4 N/mm or more. Preferably, the resin contained in the core material layer has a tensile strength of 30 MPa or more.

## Description

### Technical Field

The present invention relates to a flame retardant metal-resin composite material. The present invention particularly relates to a flame retardant metal-resin composite material suitable as an exterior construction material configured by joining metal sheets on both surfaces of a core material sheet formed of a resin layer containing a metal hydroxide.

### Background Art

A flame retardant metal-resin composite material configured by joining metal sheets on both surfaces of a core material sheet formed of a resin layer containing an inorganic filler is a material that has many features such as lightweight properties, corrosion resistance, heat insulating properties, flame retardancy, weather resistance, good surface appearance, and metal-like workability. However, this composite material is not satisfactory as exterior construction materials such as external wall materials for buildings and the like.

One of the desirable physical properties of exterior construction materials is flame retardancy. For example, in a non-combustibility test based on the ISO 1716 (2010) testing method, the combustion calorific value of the core material layer is required to be 2.0 MJ/kg or less in some cases.

Exterior construction materials are usually required to exhibit a particular stiffness as a structural material. The structure of the aforementioned composite material can have an increased stiffness without sacrificing the lightweight properties by increasing the thickness of the core material sheet. However, increasing the thickness of the resin sheet constituting the core material increases the amount of the resin used, which is a combustible substance, and degrades the flame retardancy.

In order to resolve this issue, for example, the following documents disclose composite materials.

PTL 1 describes a flame retardant composite material obtained by joining metal sheets on both surfaces of a core material sheet, in which: the core material sheet includes an expanded resin layer containing 20 to 80 mass% of an inorganic filler and having an expansion ratio of 1.1 to 3.0, and non-expanded resin layers respectively stacked on both surfaces of the expanded resin layer; the metal sheets each have a thickness of 0.1 to 2 mm, the expanded resin layer has a thickness of 2 to 8 mm, and the non-expanded resin layers each have a thickness of 0.05 to 0.5 mm; and the resin in the core material sheet is a polyolefin and has a heat of combustion of 6000 BTU/ft² or less.

PTL 2 describes a flame retardant laminate obtained by joining a metal sheet on a sheet-shaped resin plate, in which the resin plate contains a metal hydroxide, a polyolefin resin, and an adhesive resin that increases compatibility between the metal hydroxide and the polyolefin resin.

PTL 3 describes a metal-resin composite body in which a resin member and a metal member are joined, the resin member is obtained by curing a thermosetting resin composition containing a thermosetting resin and an elastomer, the metal member at least includes a rough layer formed of fine irregularities at least in the joined surface that joins with the resin member, and part of the elastomer is present inside recesses constituting the irregularities in the rough layer.
PTL 1: Japanese Unexamined Patent Application Publication No. 5-245963
PTL 2: Japanese Unexamined Patent Application Publication No. 2004-358771
PTL 3: International Publication No. 2015/087722

The metal-resin composite materials described in PTL 1 to PTL 3 do not satisfy that the combustion calorific value of the core material layer is 2.0 MJ/kg or less and that the surface material peel strength of the metal-resin composite material is 2.4 N/mm or more.

### Summary of Invention

An object of the present invention is to provide a flame retardant metal-resin composite material that has a low combustion calorific value and a high surface material peel strength.

The inventors of the present invention have first configured a core material layer as a layer containing a metal hydroxide and a resin and having combustion calorific value of 2.0 MJ/kg or less, and then adjusted this configuration as appropriate so that the metal-resin composite material can satisfy a surface material peel strength of 2.4 N/mm or more.

The present invention provides a flame-retardant metal-resin composite material in which metal layers are respectively stacked on both surfaces of a core material layer containing a resin, wherein: the core material layer contains a metal hydroxide and a resin, the core material layer has a combustion calorific value of 2.0 MJ/kg or less, and the metal-resin composite material has a surface material peel strength of 2.4 N/mm or more.

In one embodiment of the present invention, when the core material layer is heated at 750°C for 20 minutes in a test in compliance with an ISO 1182 testing method, the core material layer exhibits a maximum temperature increase of 50°C or less.

In one embodiment of the present invention, the resin contained in the core material layer has a combustion calorific value of 40 MJ/kg or less.

In one embodiment of the present invention, the resin contained in the core material layer has a tensile strength of 30 MPa or more.

In one embodiment of the present invention, the resin contained in the core material layer has a melt viscosity of 3,000 Pa·s or less.

In one embodiment of the present invention, the flame retardant metal-resin composite material further comprises adhesive layers interposed between the core material layer and the metal layers, wherein the adhesive layers contain a resin having a polar group in a side chain.

In one embodiment of the present invention, the resin contained in the core material layer is a polyvinyl alcohol resin.

In one embodiment of the present invention, the polar group is at least one functional group selected from the group consisting of a hydroxyl group, a carboxyl group, an aldehyde group, an amino group, a glycidyl group, and a ketone group.

In one embodiment of the present invention, the resin having a polar group in a side chain is a modified polyolefin resin, an olefin copolymer, an acrylic resin, a polyurethane resin, or an epoxy resin.

In one embodiment of the present invention, the core material layer contains 1 to 10 parts by mass of the resin and 40 to 99 parts by mass of the metal hydroxide with respect to 100 parts by mass of the core material layer. Advantageous Effects of Invention

According to the present invention, a flame retardant metal-resin composite material that has excellent flame retardancy and excellent joining strength between the metal sheets and the core material layer can be obtained. Description of Embodiments

The present invention provides a flame-retardant metal-resin composite material in which metal layers are respectively stacked on both surfaces of a core material layer containing a resin, wherein: the core material layer contains a metal hydroxide and a resin, the core material layer has a combustion calorific value of 2.0 MJ/kg or less, and the metal-resin composite material has a surface material peel strength of 2.4 N/mm or more.

The flame retardant as used in the term, flame retardant metal-resin composite material, means that the combustion calorific value of the core material layer is 2.0 MJ/kg or less.

### <Core material layer>

The core material layer of the flame retardant metal-resin composite material of the present invention contains at least a resin and a metal hydroxide.

Hereinafter, the resin contained in the core material layer may be referred to as a core material resin.

### [Core material resin]

The core material resin is not particularly limited, but is preferably at least one resin having a polar group such as a hydroxyl group, a carboxyl group, an aldehyde group, an amino group, a glycidyl group, or a ketone group since the interaction with the metal hydroxide is enhanced.

Specific examples thereof include modified polyolefin resins, olefin copolymers, acrylic resins, polyurethane resins, epoxy resins, polyvinyl alcohol resins, and polyvinyl alcohol derivatives.

Examples of the modified polyolefin resins include maleic anhydride graft-modified polyolefin resins such as maleic anhydride graft copolymers of polyethylene and maleic anhydride graft copolymers of ethylene/propylene copolymers; and unsaturated carboxylic acid graft-modified polyolefin resins such as (meth)acrylic acid graft-modified polyolefin resins such as acrylic acid graft copolymers of polyethylene.

Examples of the olefin copolymers include ethylenic copolymers such as ethylene/(meth)acrylic acid (ester) copolymers, ethylene/vinyl acetate copolymers, ethylene/glycidyl acrylate copolymers, and ethylene/maleic anhydride copolymers.

Examples of the acrylic resins include resins that have at least a (meth)acrylic acid (ester) unit as a constitutional unit and, as the optional constitutional unit used in addition to the (meth)acrylic acid (ester) monomer, monomer units such as styrene, acrylonitrile, methyl vinyl ketone, vinyl acetate, allyl alcohols such as methallyl alcohol, allyl alcohol, and 2-hydroxymethyl-1-butene, N-vinylpyrrolidone, or N-vinyl carbazole.

Examples of the polyurethane resins include resins in which polyurethane bonds are formed as a result of polyaddition between a polyol component, such as alkylene glycol or polyester polyol, and a diisocyanate component, such as an aromatic diisocyanate, an aliphatic diisocyanate, or an alicyclic diisocyanate.

Examples of the epoxy resins include alicyclic epoxy resins having skeletons derived from alicyclic compounds, epoxy resins having glycidyl ether groups, and epoxy resins having aromatic groups.

Examples of the polyvinyl alcohol resins include polyvinyl alcohol resins, modified polyvinyl alcohol resins containing 1 to 50 mol% of α-olefin units having 4 or less carbon atoms, and polyvinyl acetal resins (polyvinyl butyral resins etc.).

When the core material resin is an ethylenic copolymer, such as an ethylene/(meth)acrylic acid (ester) copolymer or an ethylene/vinyl acetate copolymer, the content of the constitutional units other than ethylene (for example, (meth)acrylic acid (ester) units or vinyl acetate units) is preferably 10 mass% or more, more preferably 15 mass% or more, yet more preferably 17.5 mass% or more, and particularly preferably 20 mass% or more. The upper limit of the content of the constitutional units other than ethylene is not particularly limited, but is usually 90 mass% or less, preferably 80 mass% or less, and particularly preferably 70 mass% or less.

When the core material resin is a polyvinyl alcohol resin, the hydroxyl group mass concentration of the polyvinyl alcohol resin (the mass% of the vinyl alcohol units in the resin) is preferably 10 to 40 mass%, and, in order to obtain a multilayer structure having an excellent interlayer adhesive force, is more preferably 15 to 40 mass% and particularly preferably 25 to 35 mass%.

The hydroxyl group mass concentration of the polyvinyl alcohol resin can be measured in accordance with JIS K 6728 "TESTING METHODS FOR POLYVINYL BUTYRAL". For example, a particular amount of the polyvinyl alcohol resin is weighed, and the hydroxyl groups in the polyvinyl alcohol resin are acetylated by using a mixed solution containing acetic anhydride and pyrimidine, and is titrated with a sodium hydroxide solution. The hydroxyl group mass concentration can be calculated by multiplying the number of moles of the consumed sodium hydroxide with the molecular weight of the hydroxyl group-containing units.

The core material resin is preferably a polyvinyl alcohol resin from the viewpoint of filler chargeability, and is more preferably a modified polyvinyl alcohol resin or polyvinyl acetal resin containing 1 to 50 mol% of α-olefin units having 4 or less carbon atoms, and particularly preferably a polyvinyl butyral resin (hereinafter may be referred to as PVB).

The core material resin may be modified by a reaction with a modifier such as an unsaturated carboxylic acid.

The combustion calorific value of the core material resin is not particularly limited, but is preferably 40 MJ/kg or less, more preferably 38 MJ/kg or less, and yet more preferably 35 MJ/kg or less. The combustion calorific value is measured by a method in compliance with an ISO 1716 (2010) testing method. The method in compliance with an ISO 1716 (2010) testing method uses a bomb-type heat-insulated calorimeter or a bomb-type automatic calorimeter.

The tensile strength of the core material resin is not particularly limited, but is preferably 30 MPa or more, more preferably 35 MPa or more, and particularly preferably 40 MPa or more. The tensile strength is preferably 30 MPa or more since entanglement between main chains of the resin contained in the adhesive layer is strengthened, and thus the surface material peel strength of the composite material is increased. The tensile strength is measured by a testing method described in ISO 527-1 (2012): Plastics - Determination of tensile properties.

The melt viscosity of the core material resin is not particularly limited, but is preferably 3,000 Pa·s or less, more preferably 2,000 Pa·s or less, and particularly preferably 1,000 Pa·s or less. The lower limit of the melt viscosity of the core material resin is not particularly limited but is usually 10 Pa·s or more, preferably 30 Pa·s or more, and particularly preferably 50 Pa·s or more. When the melt viscosity of the core material resin is 3,000 Pa·s or less, the resin is likely to be present at the interface between the adhesive layer and the core material layer during thermal molding in the production process, and thus the joining strength between the core material resin and the metal layer is improved.

The melt viscosity is a value at a temperature of 200°C and a shear rate of 100 [1/sec], and is measured by a method for testing fluidity of plastics with a plastic capillary rheometer and a slit-die rheometer in compliance with the ISO 11443 (1995) testing method.

A preferable core material resin is a resin having a combustion calorific value of 40 MJ/kg or less, a tensile strength of 30 MPa or more, and a melt viscosity of 3,000 Pa·s or less. When the combustion calorific value, the tensile strength, and the melt viscosity of the core material resin are within the aforementioned ranges, the flame retardancy and the peel strength of the composite material can be increased despite a small amount of the resin in the core material layer.

The weight-average molecular weight (Mw) of the core material resin is preferably 5.0 × 10³ or more, more preferably 1.0 × 10⁴ or more, and yet more preferably 2.0 × 10⁴ or more. The upper limit of the weight-average molecular weight of the core material resin is not limited but is usually 1.0 × 10⁵ or less and preferably 8.0 × 10⁴ or less.

The weight-average molecular weight can be measured by a GPC method under the following measurement conditions.
Measurement instrument: HLC-8320GPC (produced by TOSOH CORPORATION)
Columns: Four TSKgel GMH_{XL} (produced by TOSOH CORPORATION)
Eluent: THF
Measurement temperature: 40°C
Eluent flow rate: 1 ml/min
Sample concentration: 1 mg/ml
Injection amount: 100 µl

The ratio (Mw/Mn) of the weight-average molecular weight (Mw) to the number-average molecular weight (Mn) of the core material resin is usually 0.5 or more, preferably 1.0 or more, and particularly preferably 1.5 or more. The upper limit of the ratio of the weight-average molecular weight to the number-average molecular weight of the core material resin is not limited, but is usually 5.0 or less, preferably 4.0 or less, and particularly preferably 3.0 or less. The number-average molecular weight is measured by the same method as the weight-average molecular weight.

### [Other components]

As far as the effects of the present invention are not impaired, the core material layer may contain one or two or more components such as a filler, a dispersant, a lubricant, a processing aid, a silane coupling agent, a curing agent, a releasing agent, a pigment, a flame retardant, a weatherproofing agent, an antioxidant, a plasticizer, a sliding agent, and a foaming agent.

Examples of the filler include a fibrous filler, a granular filler, and a plate-shaped filler. A fibrous filler is a filler having a fibrous shape. A plate-shaped filler is a filler that has a plate-like shape. A granular filler is a filler having a shape other than fibrous and plate-like shapes, and includes an irregularly shaped filler.

Examples of the fibrous filler include fibrous inorganic fillers such as glass fibers, carbon fibers, asbestos fibers, metal fibers, wollastonite, attapulgite, sepiolite, rock wool, aluminum borate whiskers, potassium titanate fibers, calcium carbonate whiskers, titanium oxide whiskers, and ceramic fibers; and fibrous organic fillers such as aramid fibers, polyimide fibers, and polyparaphenylene benzobisoxazole fibers. These may be used alone or in combination of two or more.

Examples of the plate-shaped filler and granular filler include talc, kaolin clay, calcium carbonate, zinc oxide, calcium silicate hydrates, mica, glass flakes, glass powder, magnesium carbonate, silica, titanium oxide, alumina, aluminum hydroxide, magnesium hydroxide, barium sulfate, calcium sulfate, calcium sulfite, zinc borate, barium metaborate, aluminum borate, calcium borate, sodium borate, aluminum nitride, boron nitride, silicon nitride, and disintegrated products of the fibrous fillers described above. These may be used alone or in combination of two or more.

The filler is preferably an inorganic filler, and is more preferably at least one selected from glass fibers, carbon fibers, glass beads, calcium carbonate, etc. When such a filler is used, the mechanical strength of the core material layer can be specially improved.

The filler may be surface-treated with a coupling agent such as a silane coupling agent.

Examples of the dispersant include saturated fatty acid metal salts such as zinc stearate.

Examples of the lubricant include esters or amides of saturated fatty acids.

Examples of the processing aid include acrylic resins, polyimide resins, and polyolefin resins, and modified acrylic resins are preferable.

### [Metal hydroxide]

The metal hydroxide is not particularly limited as long as thermal energy can be absorbed by decomposition of hydroxyl groups, and, specifically, inorganic metal hydroxides such as aluminum hydroxide, magnesium hydroxide, and calcium hydroxide are preferable. One metal hydroxide or two or more metal hydroxides can be used.

Among inorganic metal hydroxides, hydroxides of trivalent metals and hydroxides of alkaline-earth metals, in particular, magnesium hydroxide, aluminum hydroxide, and calcium hydroxide, are preferable. Among these, aluminum hydroxide is excellent for obtaining the effects of the present invention and is thus preferable.

The average particle diameter of the metal hydroxide is not particularly limited, and is usually 0.1 to 200 µm, preferably 20 to 180 µm, and particularly preferably 50 to 150 µm. The particle diameter of the metal hydroxide is preferably within the above-described range since dispersibility of metal hydroxide in the core material layer is increased, and the peel strength of the metal-resin composite material is improved. The average particle diameter of the metal hydroxide is measured by a microtrac method.

### [Contents of respective components]

The core material resin content and the metal hydroxide content in the core material layer are not particularly limited; however, with respect to 100 parts by mass of the core material layer, the core material resin content is preferably 1 to 10 parts by mass and the metal hydroxide content is preferably 40 to 99 parts by mass. More preferably, the core material resin content is 2 to 7 parts by mass and the metal hydroxide content is 40 to 95 parts by mass, and particularly preferably the core material resin content is 2 to 7 parts by mass and the metal hydroxide content is 60 to 95 parts by mass since the combustion calorific value of the core material layer is suppressed.

The core material resin content, the metal hydroxide content, and the filler content in the core material layer are not particularly limited; however, with respect to 100 parts by mass of the core material layer, the core material resin content is preferably 1 to 10 parts by mass and the total content of metal hydroxide and the filler is preferably 75 to 99 parts by mass. More preferably, the core material resin content is 2 to 7 parts by mass and the total content of metal hydroxide and the filler is 77 to 98 parts by mass, and particularly preferably the core material resin content is 2 to 7 parts by mass and the total content of metal hydroxide and the filler is 80 to 98 parts by mass since the combustion calorific value of the core material layer is suppressed.

### [Physical properties of core material layer]

The combustion calorific value of the core material layer is 2.0 MJ/kg or less, preferably 1.7 MJ/kg or less, more preferably 1.4 MJ/kg or less, yet more preferably 1.1 MJ/kg or less, and particularly preferably 0.8 MJ/kg or less.

The combustion calorific value of the core material layer is measured by a method in compliance with the ISO 1716 (2010) testing method. The method in compliance with the ISO 1716 (2010) testing method uses a bomb-type heat-insulated calorimeter or a bomb-type automatic calorimeter.

In a test in compliance with the ISO 1182 (2010) testing method, the core material layer preferably exhibits a maximum temperature increase of 50°C or less when heated at 750°C for 20 minutes. More preferably, the maximum temperature increase is 50°C or less and the core material layer remains unignited, and particularly preferably, the maximum temperature increase is 30°C or less and the core material layer remains unignited.

The maximum temperature increase as determined in the test in compliance with the ISO 1182 (2010) testing method is measured by retaining a columnar test specimen having a diameter of 43 mm or more and 45 mm or less and a height of 50 ±3 mm in a furnace at 750 ±5°C for 20 minutes, measuring the temperature increase with thermocouples installed at three positions, i.e., the furnace interior, the test specimen surface, and the test specimen center portion, and then subtracting the temperature measured at 20 minutes from the highest attained temperature. Whether ignition occurred is judged by observation by a person carrying out the measurement.

The thickness of the core material layer is not particularly limited, but is usually 1.0 to 8.0 mm, preferably 1.3 to 8.0 mm, more preferably 2.0 to 8.0 mm, yet more preferably 2.5 to 6.0 mm, and particularly preferably 3.0 to 5.0 mm.

### [Specific gravity of core material layer composition]

From the viewpoint of the dispersion state of the core material resin and the filler, the core material layer composition preferably has a specific gravity of usually 1.6 or more and particularly preferably 1.7 or more after the sheet formation. The upper limit of the specific gravity of the core material layer composition after sheet formation is usually 2.5 or less, preferably 2.3 or less, more preferably 2.0 or less, and particularly preferably 1.9 or less.

### <Metal layer>

Examples of the metal layer include layers composed of metals, such as aluminum, stainless steel, iron, copper, titanium, tin, and nickel, and various alloys. The metal layer is preferably formed of aluminum, stainless steel, or iron, and is particularly preferably formed of aluminum.

Considering the strength against the external force applied to the flame retardant metal-resin composite material, the thickness of the metal layer is preferably 0.1 to 0.8 mm.

### <Adhesive layer>

The flame retardant metal-resin composite material of the present invention preferably has an adhesive layer between the core material layer and the metal layer. From the viewpoint of the affinity of the adhesive layer to both the core material layer and the metal layer, the adhesive layer is preferably formed of a resin having a polar group in a side chain, and is particularly preferably formed of a thermoplastic resin having a polar group in a side chain.

From the viewpoint of improving the adhesive strength to the metal layer, the polar group is preferably at least one functional group selected from the group consisting of a hydroxyl group, a carboxyl group, an aldehyde group, an amino group, a glycidyl group, and a ketone group.

Specific examples of the thermoplastic resin having a polar group in a side chain include modified polyolefin resins, olefin copolymers, acrylic resins, polyurethane resins, epoxy resins, and thermoplastic elastomers. Among these, modified polyolefin resins, olefin copolymers, acrylic resins, polyurethane resins, and epoxy resins are preferable, and modified polyolefin resins and olefin copolymers are more preferable. More preferable examples of the thermoplastic resin having a polar group in a side chain include maleic anhydride graft-modified polyolefin resins such as maleic anhydride graft copolymers of polyethylene and maleic anhydride graft copolymers of ethylene/propylene copolymers, and unsaturated carboxylic acid graft-modified polyolefin resins such as (meth)acrylic acid graft-modified polyolefin resins such as acrylic acid graft copolymers of polyethylene; and ethylenic copolymers such as ethylene/(meth)acrylic acid (ester) copolymers, ethylene/vinyl acetate copolymers, ethylene/glycidyl acrylate copolymers, ethylene/maleic anhydride copolymers, and acrylic acid graft copolymers of polyethylene.

Particularly preferable examples of the thermoplastic resin having a polar group in a side chain are ethylene/(meth)acrylic acid (ester) copolymers, ethylene/vinyl acetate copolymers, and ethylene/maleic anhydride copolymers, and these are preferred since their interaction with the core material resin is excellent.

The aforementioned thermoplastic resins may be modified by a reaction with a modifier such as an unsaturated carboxylic acid.

The adhesive layer is preferably attached and formed on a metal layer in advance, and then joined with the core material layer.

The thickness of the adhesive layer is not particularly limited, and is usually 5 to 100 µm, preferably 10 to 80 µm, and particularly preferably 20 to 50 µm.

### <Physical properties of flame retardant metal-resin composite material>

The flame retardant metal-resin composite material of the present invention has a surface material peel strength of 2.4 N/mm or more, preferably 3.1 N/mm or more, and more preferably 3.9 N/mm or more as measured in compliance with the ISO 8510-2 testing method.

The bending strength of the flame retardant metal-resin composite material is usually 50 MPa or more and is preferably 60 MPa or more.

The bending modulus of the flame retardant metal-resin composite material when the metal layer is formed of aluminum is usually 5.0 × 10³ N/mm² or more and is preferably 3.0 × 10⁴ N/mm² or more. The upper limit of the bending modulus is not limited but is usually 7.0 × 10⁴ N/mm² or less.

When the metal layer is formed of stainless steel or iron, the bending modulus of the flame retardant metal-resin composite material is usually 1.4 × 10⁴ N/mm² or more and preferably 3.0 × 10⁴ N/mm² or more, and is usually 2.0 × 10⁵ N/mm² or less.

The bending stiffness of the flame retardant metal-resin composite material is usually 1.0 × 10⁷ N/mm² or more and is preferably 1.3 × 10⁷ N/mm² or more.

The bending strength, the bending modulus, and the bending stiffness of the flame retardant metal-resin composite material described above are measured by a two-point support, central concentrated load method performed on a sample (width: 60 mm, span: 200 mm) at a loading speed of 50 mm/minute.

### <Thickness of flame retardant metal-resin composite material>

The thickness of the flame retardant metal-resin composite material as a whole is not particularly limited since the thickness is appropriately set according to the usage of the flame retardant metal-resin composite material; however, the thickness is usually 1.5 mm or more, preferably 2.0 mm or more, more preferably 2.5 mm or more, and particularly preferably 3.0 mm or more. The upper limit of the thickness of the flame retardant metal-resin composite material is not particularly limited, and may be 50 mm or less.

### <Method for producing flame retardant metal-resin composite material>

The method for producing a flame retardant metal-resin composite material of the present invention will now be described. The method for producing the flame retardant metal-resin composite material of the present invention is not particularly limited, and examples of the method include an injection molding method, a transfer molding method, a compression molding method, and injection compression molding method. Among these, a compression molding method is particularly suitable.

One example of the method for producing the flame retardant metal-resin composite material by a compression molding method is as follows.

That is, 1 to 10 mass% of a core material resin, 40 to 95 mass% of a hydroxide, and, if needed, one or two or more of the aforementioned fillers, dispersants, lubricants, processing aids, silane coupling agents, curing agents, releasing agents, pigments, flame retardants, weatherproofing agents, antioxidants, plasticizers, sliding agents, and foaming agents are mixed by a known method using a mixer or the like (preferably, the resin is melted by kneading under heating so that the metal hydroxide, the resin, and other components are homogeneously mixed) to obtain a core material layer composition, and 100 mass% of the core material layer composition is supplied onto a first metal layer having an adhesive layer. Next, a second metal layer having an adhesive layer is superimposed thereon, and the resulting product is heated and compressed by a known method, such as thermal pressing. The adhesive layer of the second metal layer is disposed on the core material layer side. The heating condition is not particularly limited, but is preferably 140 to 200°C and particularly preferably 160 to 180°C. The compressing condition is not particularly limited, but is usually 300 to 1000 N/cm² and particularly preferably 500 to 800 N/cm². The retaining time is not particularly limited, and is preferably 1 to 60 seconds and particularly preferably 10 to 30 seconds.

As a result of the above-described operation, a flame retardant metal-resin composite material of the present invention is obtained.

Although the embodiments of the present invention have been described above, these embodiments are illustrative examples of the present invention and various features other than those described above can be employed.

### EXAMPLES

The present embodiments are now described in detail by referring to Examples and Comparative Examples.

However, the present embodiments are not limited by the description of these examples.

In Examples and Comparative Examples described below, the following measurement methods were employed.

### <Combustion calorific values of core material layer and core material resin>

Measurement was carried out by a method in compliance with the ISO 1716 (2010) testing method. By using a bomb-type heat-insulated calorimeter or a bomb-type automatic calorimeter, a specimen was combusted and the temperature increase during this process was measured. Then the number of J relative to 1 g of the specimen was determined, and the constant volume calorific value was measured.

### <Surface material peel strength of flame retardant metal-resin composite material>

Measurement was carried out by a method in compliance with the ISO 8510-2 testing method. A test specimen having a width of 25.0 mm ±0.5 mm and a minimum length of 150 mm was prepared, the fist metal layer was caused to detach for about 60% of the length of the test specimen, the first metal layer was gripped with a fixed holder, and the undetached side was attached to another holder. Here, attentions were to be paid so that the test specimen installed between the holders was under even tension with respect to the width of the test specimen. Peeling was performed at a velocity of 100 mm/min, and continued until the length of the peeled portion reached at least 50 mm. For each test specimen, an average peel strength (N) was measured from a force-holder moving distance curve across the peel length excluding first 25 mm.

### <Bending strength>

The bending strength was measured by a two-point support, central concentrated load method by using a test piece (width: 60 mm, span: 200 mm) at a loading speed of 50 mm/minute.

### <Tensile strength>

The tensile strength was measured by a testing method described in ISO 527-1 (2012): Plastics - Determination of tensile properties. Specifically, an ISO multipurpose dumbbell A test specimen of each resin was prepared, and the tensile strength at 23°C was measured on each test specimen by a method that complied with ISO 527 using an evaluation instrument.

### <Melt viscosity>

Measurement was conducted by a method for testing fluidity of plastics with a plastic capillary rheometer and a slit-die rheometer in accordance with ISO 11443 (1995). Specifically, the dependency of the melt viscosity on the temperature was measured with a flow tester. The flow rate was calculated from the measurement time and the amount of the piston movement relative to the measurement time, the shear rate was calculated using the flow rate value, and the melt viscosity was calculated from the shear rate and the shear stress applied to the sample as an apparent density at a temperature of 200°C and a shear rate of 100 [1/sec].

### <Maximum temperature increase and ignition test of core material layer>

The maximum temperature increase and whether ignition occurred were examined by a test in accordance with the ISO 1182 (2010) test method. Specifically, a columnar test specimen having a diameter of 43 mm or more and 45 mm or less and a height of 50 ±3 mm was retained in in a furnace at 750 ±5°C for 20 minutes, the temperature increase was measured with thermocouples installed at three positions, i.e., the furnace interior, the test specimen surface, and the test specimen center portion, and then the temperature measured at 20 minutes was subtracted from the highest attained temperature. Whether ignition occurred was judged by observation of a person carrying out the measurement.

### [Example 1]

A metal-resin composite material was produced by the following procedure by using a 0.5 mm-thick aluminum sheet having a 30 µm-thick adhesive layer (ethylene/maleic anhydride copolymer), and a core material layer composition.

### <Preparation of core material layer composition]

A core material layer composition was prepared by melt-kneading 5 mass% of a polyvinyl alcohol resin (polyvinyl butyral, weight-average molecular weight (Mw): 2.1 × 10⁴, Mw/number-average molecular weight (Mn): 2.3, hydroxyl group mass concentration: 18 to 21 mass%, combustion calorific value: 30.4 MJ/kg, tensile strength: 46 MPa, melt viscosity: 300 Pa·S), 80 mass% of a metal hydroxide (aluminum hydroxide), and 15 mass% of an inorganic filler (hollow glass balloons, particle diameter: 1.2 mm or less, bulk density: 0.4 g/m³) at 160°C.

### <Thermal press molding>

The core material composition described above was supplied onto an aluminum sheet having an adhesive layer, another aluminum sheet having an adhesive layer was superimposed thereon, and the resulting product was retained at a pressure of 500 N/cm² at 160°C for 10 seconds using a thermal pressing machine so as to prepare a metal-resin composite body having a thickness of 4 mm. The surface material peel strength of this metal-resin composite material, and the combustion calorific value, the maximum temperature increase, and the results of the ignition test of the core material layer are indicated in Table 1.

### [Example 2]

A metal-resin composite material was produced as in Example 1 except that the polyvinyl butyral blend ratio in the core material resin in Example 1 was changed from 5 mass% to 7 mass%, the aluminum hydroxide blend ratio was changed from 80 mass% to 48 mass%, and 30 mass% of calcium carbonate was additionally blended as an inorganic filler. The surface material peel strength of the metal-resin composite material, and the combustion calorific value, the maximum temperature increase, and the results of the ignition test of the core material layer are indicated in Table 1.

### [Comparative Example 1]

A metal-resin composite material was produced as in Example 1 except that the core material resin in Example 1 was changed from polyvinyl butyral to ethylene/methyl methacrylate copolymer resin (EMAA, combustion calorific value: 43.3 MJ/kg, tensile strength: 24 MPa, melt viscosity: 100 Pa·S). The measured surface material peel strength of the metal-resin composite material, and the measured combustion calorific value of the core material layer are indicated in Table 1. Since the measurement result for the surface material peel strength was poor, the maximum temperature increase was not measured and the ignition test was omitted.

### [Comparative Example 2]

A metal-resin composite material was produced as in Example 2 except that the core material resin in Example 2 was changed from polyvinyl butyral to an ethylene/methyl methacrylate copolymer resin (EMAA, combustion calorific value: 43.3 MJ/kg, tensile strength: 24 MPa, melt viscosity: 100 Pa·S). The surface material peel strength of the metal-resin composite material, and the combustion calorific value, the maximum temperature increase, and the results of the ignition test of the core material layer are indicated in Table 1.

### [Comparative Example 3]

A metal-resin composite material was produced as in Example 2 except that the core material resin in Example 2 was changed from polyvinyl butyral to an ethylene/vinyl acetate copolymer resin (EVA, combustion calorific value: 25.2 MJ/kg, tensile strength: 2 MPa, melt viscosity: 400 Pa·S). The measured surface material peel strength of the metal-resin composite material, and the measured combustion calorific value of the core material layer are indicated in Table 1. Since the measurement result for the surface material peel strength was poor, the maximum temperature increase was not measured and the ignition test was omitted.

**[Table 1]**

| | | | Example 1 | Example 2 | Comparative Example 1 | Comparative Example 2 | Comparative Example 3 |
|---|---|---|---|---|---|---|---|
| Core material layer composition blend (mass%) | Core material resin | PVB | 5 | 7 | | | |
| | | EMAA | | | 5 | 7 | |
| | | EVA | | | | | 7 |
| | Metal hydroxide | Aluminum hydroxide | 80 | 48 | 80 | 48 | 48 |
| | Inorganic filler | Calcium carbonate | 0 | 30 | 0 | 30 | 30 |
| | | Glass balloons | 15 | 15 | 15 | 15 | 15 |
| Properties of core material resin | | Combustion calorific value (MJ/kg) | 30.4 | 30.4 | 43.3 | 43.3 | 25.2 |
| | | Tensile strength (MPa) | 46 | 46 | 24 | 24 | 2 |
| | | Melt viscosity (Pa·s) | 300 | 300 | 100 | 100 | 400 |
| Results of measurement on core material layer | Combustion calorific value (MJ/kg) | | 0.4 | 1.3 | 1.0 | 2.2 | 1.1 |
| | Ignition test | | Ignition did not occur | Ignition occurred | - | Ignition occurred | - |
| | Maximum temperature increase | Furnace interior Temperature increase (°C) | 0.0 | 16.2 | - | 73.3 | - |
| | | Test specimen surface Temperature increase (°C) | 0.0 | 5.7 | - | 112.4 | - |
| | | Test specimen center portion Temperature increase (°C) | 0.0 | 0.0 | - | 0.0 | - |
| Surface material peel strength of metal-resin composite material (N/mm) | | | 6.7 | 9.4 | 0.8 | 6.7 | 0.8 |

### [Observations]

The metal-resin composite materials of Examples 1 and 2 used PVB, which is a resin having a tensile strength of 30 MPa or more and a melt viscosity of 3,000 Pa·s or less, as the core material resin, and thus the calorific value was low, the flame retardancy was excellent, and the surface material peel strength was high. This is presumably because the affinity of the PVB to aluminum hydroxide serving as the metal hydroxide, and the inorganic filler was high, and thus, the surface material peel strength increased by the abundant PVB at the interface between the core material layer and the adhesive layers.

In the metal-resin composite material of Comparative Example 1, the tensile strength of the core material resin was 24 MPa, which was less than 30 MPa. In the metal-resin composite material of Comparative Example 3, the tensile strength of the core material resin was 2 MPa, which was less than 30 MPa. Thus, the surface material peel strengths of the metal-resin composite materials of Comparative Examples 1 and 3 is as low as 0.8 N/mm.

The metal-resin composite material of Comparative Example 2 exhibited improved surface material peel strength compared to Comparative Example 1 since the amount of the core material resin in the core material layer is larger than that of the metal-resin composite material of Comparative Example 1. However, since the combustion calorific value of the core material layer was 2.2 MJ/kg, which is larger than 2.0 MJ/kg, the maximum temperature increase of the core material layer exceeded 50°C, and ignition occurred in the ignition test.

Although the present invention has been described in detail with reference to particular embodiments, it is apparent to a person skilled in the art that various modifications can be made therein without departing from the spirit and scope of the present invention.

The present application is based on Japanese Patent Application No. 2018-024257 filed on February 14, 2018, and Japanese Patent Application No. 2018-178911 filed on September 25, 2018, which are incorporated herein by reference in their entirety.

## Claims

1. A flame-retardant metal-resin composite material in which metal layers are respectively stacked on both surfaces of a core material layer containing a resin, wherein:
the core material layer contains a metal hydroxide and a resin with the proviso that the resin excludes polyurethane resin and epoxy resin,
the core material layer has a combustion calorific value of 2.0 MJ/kg or less, and
the metal-resin composite material has a surface material peel strength of 2.4 N/mm or more.

2. The flame retardant metal-resin composite material according to Claim 1, wherein, when the core material layer is heated at 750°C for 20 minutes in a test in compliance with an ISO 1182 testing method, the core material layer exhibits a maximum temperature increase of 50°C or less.

3. The flame retardant metal-resin composite material according to Claim 1 or 2, wherein the resin contained in the core material layer has a combustion calorific value of 40 MJ/kg or less.

4. The flame retardant metal-resin composite material according to any one of Claims 1 to 3, wherein the resin contained in the core material layer has a tensile strength of 30 MPa or more.

5. The flame retardant metal-resin composite material according to any one of Claims 1 to 4, wherein the resin contained in the core material layer has a melt viscosity of 3,000 Pa·s or less.

6. The flame retardant metal-resin composite material according to any one of Claims 1 to 5, further comprising adhesive layers interposed between the core material layer and the metal layers, wherein the adhesive layers contain a resin having a polar group in a side chain.

7. The flame retardant metal-resin composite material according to any one of Claims 1 to 6, wherein the resin contained in the core material layer is a polyvinyl alcohol resin.

8. The flame retardant metal-resin composite material according to Claim 6, wherein the polar group is at least one functional group selected from the group consisting of a hydroxyl group, a carboxyl group, an aldehyde group, an amino group, a glycidyl group, and a ketone group.

9. The flame retardant metal-resin composite material according to Claim 6 or 8, wherein the resin having a polar group in a side chain is a modified polyolefin resin, an olefin copolymer, an acrylic resin, a polyurethane resin, or an epoxy resin.

10. The flame retardant metal-resin composite material according to any one of Claims 1 to 9, wherein the core material layer contains 1 to 10 parts by mass of the resin and 40 to 99 parts by mass of the metal hydroxide with respect to 100 parts by mass of the core material layer.
